# EUROPÄISCHE PATENTSCHRIFT

(11) **EP 1 190 296 B1**
(45) Veröffentlichungstag und Bekanntmachung des Hinweises auf die Patenterteilung: **26.01.2005**
(21) Anmeldenummer: 00974270.1
(22) Anmeldetag: 26.05.2000
(51) Int. Cl.: G06F 1/16

(54) **PRÄSENTATIONSVORRICHTUNG**
PRESENTATION DEVICE
DISPOSITIF DE PRESENTATION

(30) Priorität: 28.05.1999 DE 19924694; 29.10.1999 DE 19952486; 29.10.1999 DE 19952485
(43) Veröffentlichungstag der Anmeldung: 27.03.2002
(73) Patentinhaber: JOPET GmbH & Co.KG, 22850 Norderstedt (DE)
(72) Erfinder: Dipl.-Ing. Joachim Schweizer, 81245 München (DE); Dipl.-Ing. Maximilian Rüttiger, 80339 München (DE)
(74) Vertreter: Schubert, Klemens, Dr.
(86) Internationale Anmeldenummer: PCT/DE2000/001710
(87) Internationale Veröffentlichungsnummer: WO 2001/002536

(56) Entgegenhaltungen:
- EP-A- 0 807 879
- DE-A- 19 616 029
- DE-A- 19 800 376
- PATENT ABSTRACTS OF JAPAN vol. 1998, no. 11, 30. September 1998 (1998-09-30) & JP 10 171382 A (SONY CORP), 26. Juni 1998 (1998-06-26) & JP 10 171382 A (SONY CORP) 26. Juni 1998 (1998-06-26)
- PATENT ABSTRACTS OF JAPAN vol. 1997, no. 06, 30. Juni 1997 (1997-06-30) & JP 09 034589 A (SANYO ELECTRIC CO LTD), 7. Februar 1997 (1997-02-07) & JP 09 034589 A (SANYO ELECTRIC CO LTD) 7. Februar 1997 (1997-02-07)
- PATENT ABSTRACTS OF JAPAN vol. 1998, no. 11, 30. September 1998 (1998-09-30) & JP 10 177430 A (FUJITSU LTD), 30. Juni 1998 (1998-06-30) & JP 10 177430 A (FUJITSU LTD) 30. Juni 1998 (1998-06-30)

## Beschreibung

Die Erfindung bezieht sich auf eine Präsentationsvorrichtung, die vorwiegend für eine Kundenberatung im Außendienst konzipiert ist.

Wenn ein Beratungs- bzw. Verkaufsgespräch beim Kunden durchgeführt wird, sind die räumlichen Verhältnisse oft nicht für eine optimale Präsentation geeignet, d. h., moderne Präsentationsmittel, wie z. B. ein Overhead-Projektor mit LC-Display oder ein Videoprojektor, können nicht eingesetzt werden. Wenn z. B. Versicherungsvertreter oder Finanzdienstleister ihre Kunden in der Wohnung aufsuchen, ist es nicht möglich, eine Projektionswand aufzustellen. Derartige räumliche Veränderungen werden von den meisten Kunden abgelehnt. Es ist daher üblich, Berechnungen und Diagramme auf einem Blatt Papier aufzuzeichnen und dabei das Blatt halb zum Kunden zu drehen, damit er der ergänzenden schriftlichen Erläuterung folgen kann. Es ist auch möglich, einen Laptop-Computer zu benutzen, was jedoch insofern Probleme bringt, da der Verkäufer und der Kunde gemeinsam einen relativ kleinen Bildschirm betrachten müssen.

Es hat sich gezeigt, daß die Präsentation mit einem Computer eine Reihe von Vorteilen bietet. Mittels spezieller Software können z. B. verschiedenste Varianten einer Lebensversicherung durchgerechnet und sofort graphisch, d. h. leicht verständlich und daher überzeugend, dargestellt werden. Da sich diese Präsentationstechnik ständig weiterentwickelt und vom Kunden als sehr komfortabel akzeptiert wird, besteht das dringende Bedürfnis, auch für den kleinen Präsentationseinsatz vor Ort, d. h. in der Wohnung des Kunden oder in einem kleinen Büroraum, diese Technik einzusetzen.

Moderne Kleincomputer, wie z. B. kleine Notebooks, bieten auf Grund ihrer hohen Rechenleistung prinzipiell die Möglichkeit, auch programm- und speicherintensive, d. h. anspruchsvolle Präsentationssoftware anzuwenden. Somit wäre auch beim Kunden vor Ort eine überzeugende Präsentation möglich, wenn das o. g. Problem der räumlichen Einschränkungen gelöst werden könnte.

Dazu wurde z. B. in dem deutschen GBM 94 06985 vorgeschlagen, an einem herkömmlichen Laptop mit Flachbildschirm an dessen Oberkante einen weiteren Flachbildschirm über ein Gelenk anzukoppeln, so daß zwei sich gegenübersitzende Personen jeweils auf einen Bildschirm sehen können. Diese Vorrichtung ist prinzipiell für den vorgesehenen Anwendungsfall geeignet, jedoch sehr umständlich in der Bedienung. Es besteht daher das Bedürfnis nach einer weiteren Verbesserung der Präsentationsqualität, nach einer weiteren Kostensenkung, nach einer Gewichtsverringerung oder nach einer verbesserten Bedienbarkeit.

Die Aufgabe der Erfindung besteht in der Schaffung einer rechnergestützten Präsentationsvorrichtung, die auch unter sehr beengten räumlichen Verhältnissen eine überzeugende Präsentation ermöglicht und einfach und bequem zu bedienen ist.

Die Aufgabe wird mit einer Vorrichtung nach Anspruch 1 gelöst. Die Präsentationsvorrichtung ist ein herkömmlicher Laptop-Computer mit einer abnehmbaren Tastatur und einem schwenkbaren Hauptbildschirm, der im eingeklappten Zustand auf dem Grundkörper des Laptop-Computer aufliegt und die Tastatur abdeckt.

Erfindungsgemäß ist unter der Tastatur in dem Grundkörper des Laptop-Computers ein weiterer Bildschirm angeordnet, der ebenfalls an den Laptop-Computer angeschlossen ist. Weiterhin ist das Gelenk des schwenkbaren Hauptbildschirms so ausgebildet, daß der Hauptbildschirm wenigstens um ca. 220 Grad schwenkbar ist.

Die Präsentationsvorrichtung kann als herkömmlicher Laptop-Computer genutzt werden, wobei wahlweise die Tastatur abgenommen werden kann.

Wenn einer zweiten Person eine Präsentation gezeigt werden soll, wird der Hauptbildschirm um wenigstens 220 Grad oder mehr umgeklappt, so daß die zweite Person nunmehr auf den Hauptbildschirm sehen kann. Durch eine Steuereinrichtung wird das Bild des Hauptbildschirms um 180 Grad gedreht.

Die Bedienerperson steuert die Präsentation mittels Tastatur, Maus oder anderer Eingabeeinrichtungen und verfolgt den Ablauf der Präsentation auf dem zweiten Bildschirm, der unter der Tastatur im Grundkörper des Laptop-Computers angeordnet ist, wobei die Tastatur während der Präsentation nicht auf dem Grundkörper aufliegt, jedoch mit dem Rechner drahtlos verbunden ist.

Der Hauptvorteil dieser Ausführungsform der Erfindung gegenüber dem GBM 94 06985 besteht darin, daß für den zweiten Bildschirm keine zusätzliche mechanische Haltevorrichtung erforderlich ist, da der Bildschirm unmittelbar in den Grundkörper des Laptops integriert ist und dort mechanisch stabil gehalten wird. Durch diese Maßnahme werden die Kosten und das Gesamtgewicht der Präsentationsvorrichtung gegenüber der Lösung nach dem GBM 94 06985 erheblich gesenkt. Außerdem wird die Handhabbarkeit verbessert.

Das Einschalten des zweiten Bildschirms und das Umklappen des Bildes des Hauptbildschirms kann wahlweise über einen Schalter oder durch Tastatureingabe manuell erfolgen. Zweckmäßig ist jedoch gemäß Anspruch 2 ein automatisches Einschalten und Drehen des Bildes, indem z. B. eine mit dem Gelenk gekoppelte Schwenkwinkelerkennungsvorrichtung angeordnet ist, die veranlaßt, daß bei einem vorbestimmten Schwenkwinkel des Hauptbildschirms das Bild des Hauptbildschirms um 180 Grad gedreht und auch der zweite Bildschirm eingeschaltet wird.

Nach Anspruch 3 ist der zweite Bildschirm kleiner als der Hauptbildschirm. Diese Weiterbildung ist dann vorteilhaft, wenn z. B. auf dem Hauptbildschirm dem Kunden eine aufwendige Grafik, das ist z. B. eine ansprechende und überzeugende Präsentation, gezeigt werden soll. Die Bedienperson, d. h. der Verkäufer, benötigt diese hochwertige Darstellung nicht. Er muß lediglich die Präsentation verfolgen können und bei Eingaben, z. B. persönliche Daten des Kunden, die Richtigkeit der Eingabe überprüfen können.

Da der zweite Bildschirm auch eine geringere Auflösung benötigt, ist er kostengünstiger als der Hauptbildschirm, wodurch die Gesamtkosten weiter gesenkt werden können.

Die Aufgabe der Erfindung wird weiterhin mit einer Vorrichtung nach Anspruch 4 gelöst.

Die Präsentationsvorrichtung ist ein Laptop-Computer mit einer verschiebbaren Tastatur und einem schwenkbaren Hauptbildschirm, der im eingeklappten Zustand auf dem Grundkörper des Laptop-Computers aufliegt und die Tastatur abdeckt.

Erfindungsgemäß ist unter der Tastatur in dem Grundkörper ein weiterer Bildschirm angeordnet, der ebenfalls von dem Laptop-Computer angesteuert wird. Weiterhin ist das Gelenk des schwenkbaren Hauptbildschirms so ausgebildet, daß der Hauptbildschirm wenigstens um ca. 220 Grad schwenkbar ist.

Die Präsentationsvorrichtung kann als herkömmlicher Laptop-Computer genutzt werden, wobei wahlweise die Tastatur so verschoben werden kann, so daß der darunterliegende Bildschirm sichtbar wird. Das ist z. B. zweckmäßig, wenn auf dem zweiten Bildschirm eine Menüleiste angezeigt wird, um die gesamte Anzeigefläche des Hauptbildschirms nutzen zu können.

Wenn einer zweiten Person eine Präsentation gezeigt werden soll, wird der Hauptbildschirm um wenigstens 220 Grad oder mehr umgeklappt, so daß die zweite Person nunmehr auf den Hauptbildschirm sehen kann. Durch eine Steuereinrichtung wird das Bild des Hauptbildschirms um 180 Grad gedreht.

Die Bedienperson steuert die Präsentation mittels Tastatur, Maus oder anderer Eingabeeinrichtungen und verfolgt den Ablauf der Präsentation auf dem zweiten Bildschirm mit der Funktion eines Kontrollbildschirms.

Das Einschalten des zweiten Bildschirms und das Umklappen des Bildes des Hauptbildschirms kann wahlweise über Schalter oder durch Tastatureingabe manuell erfolgen. Zweckmäßig ist jedoch gemäß Anspruch 5 ein automatisches Einschalten und Drehen des Bildes, indem z. B. das Gelenk mit einer Schwenkwinkelerkennungsvorrichtung gekoppelt ist, die veranlaßt, daß bei einem vorbestimmten Schwenkwinkel des Hauptbildschirms das Bild des Hauptbildschirms um 180 Grad gedreht und auch der zweite Bildschirm eingeschaltet wird.

Nach Anspruch 6 ist der zweite Bildschirm ein Schwarz-Weiß-Bildschirm. Diese Weiterbildung ist dann vorteilhaft, wenn z. B. auf dem Hauptbildschirm dem Kunden eine aufwendige farbige Graphik, das ist z. B. eine ansprechende und überzeugende Präsentation, gezeigt werden soll. Die Bedienperson, d. h. der Verkäufer, benötigt diese hochwertige Darstellung nicht. Er muß lediglich die Präsentation verfolgen können und bei Eingaben, z. B. persönliche Daten des Kunden, die Richtigkeit der Eingabe überprüfen können.

Da der zweite Bildschirm auch eine geringere Auflösung benötigt, ist er kostengünstiger als der Hauptbildschirm, wodurch die Gesamtkosten gesenkt werden können.

Nach Anspruch 7 ist die Tastatur wahlweise abnehmbar, wobei die Kommunikation mit dem Rechner über eine Datenschnittstelle drahtlos erfolgt. Diese Option ist dann von Vorteil, wenn die Präsentationsvorrichtung z. B. nahe beim Kunden stehen soll.

Die Aufgabe wird weiterhin mit einer Vorrichtung nach Anspruch 8 und 12 gelöst.

Nach Anspruch 8 weist das Notebook einen Hauptbildschirm, einen integrierten Rechner und eine Stromversorgung auf, wie es bei herkömmlichen Laptops, Notebooks usw. üblich ist. Zusätzlich ist ein zweiter Bildschirm vorgesehen, der in dem Fach für CD-ROM-Laufwerke oder einem speziell dafür vorgesehenen Fach angeordnet ist. Da zwei Bildschirme anzusteuern sind, ist es für den Fachmann klar, daß auch die dazu erforderliche Elektronik vorgesehen sein muß. Weiterhin ist eine Steuereinheit vorgesehen, die das Bild des Hauptbildschirms für die Präsentation um 180 Grad dreht, so daß es betrachtungsgemäß ist.

Dem Fachmann ist klar, daß dafür die Gelenke entsprechend ausgebildet sein müssen.

Wenn das Notebook zur Präsentation verwendet werden soll, wird der Hauptbildschirm in einem Winkel von ca. 270 Grad aufgeklappt, so daß die dadurch gebildete dachförmige Konstruktion von ca. 90 Grad auf einem Tisch standfest aufgestellt werden kann. Der dem Bediener gegenübersitzende Betrachter, z. B. ein Kunde, kann den Hauptbildschirm gut einsehen und z. B. die angezeigte Entwicklung seiner Lebensversicherung verfolgen.

Damit der Bediener, z. B. der Versicherungsvertreter, die Eingaben an dem zweiten Bildschirm verfolgen kann, wird dieser nach einer bestimmten Tastatureingabe oder nach Betätigung eines Schalters elektromotorisch angetrieben seitlich aus einem Schacht ausgefahren, so daß der Bediener ihn einsehen kann. Obwohl dieser Kontrollbildschirm wesentlich kleiner als der Hauptbildschirm ist, reicht diese Größe für die Eingabekontrolle völlig aus.

Wenn die Präsentation beendet ist, wird der Kontrollbildschirm wieder elektromotorisch oder von Hand angetrieben in den Schacht eingefahren.

Nach Anspruch 9 kann die Flachbildschirmeinheit leicht aus dem Grundkörper entfernt werden. Diese Maßnahme dient der Servicefreundlichkeit.

Nach Anspruch 10 ist die Flachbildschirmeinheit in dem Schacht für das Diskettenlaufwerk angeordnet. Diese Ausführungsform ist besonders vorteilhaft, da ein herkömmliches Notebook lediglich an den Gelenken konstruktiv geändert werden muß und ohne Einschränkungen als herkömmliches Notebook genutzt werden kann. Diese Ausführungsform ist besonders kostengünstig. Es ist für den Fachmann klar, dass die elektrische Steckverbindung für diesen Zweck ausgebildet und verdrahtet sein muß.

Nach Anspruch 11 ist der Hauptbildschirm für berührungsempfindliche Eingabe ausgelegt, wodurch der Bediener auf dem zweiten Bildschirm, d. h. auf dem Kontrollbildschirm sofort erkennen kann, welche Position des Hauptbildschirms, auf dem z. B. ein Diagramm angezeigt wird, der Kunde mit dem Finger oder mit einem Stift berührt.

Anspruch 12 betrifft eine eigenständige Erfindung. Eine Flachbildschirmeinheit ist so ausgebildet, daß sie anstelle eines CD-ROM-Laufwerks in den im Notebook dafür vorgesehenen Schacht eingesetzt werden kann, wobei der Schacht jedoch an den Seitenkanten des Notebooks angeordnet ist. Die Flachbildschirmeinheit enthält einen elektromotorischen Antrieb, der den Flachbildschirm ausund einfährt, wie es bei einem CD-ROM-Laufwerk üblich ist.

Die Ausführungsformen der Erfindung werden an Hand der beigefügten schematischen Zeichnungen erläutert:
- Fig. 1: zeigt eine perspektivische Seitenansicht einer ersten Ausführungsform der Erfindung bei herkömmlicher Verwendung als Laptop.
- Fig. 2: zeigt eine perspektivische Seitenansicht der Erfindung nach Fig. 1 bei Verwendung als Präsentationsvorrichtung.
- Fig. 3: zeigt eine perspektivische Seitenansicht einer zweiten Ausführungsform der Erfindung bei herkömmlicher Verwendung als Laptop.
- Fig. 4: zeigt eine perspektivische Seitenansicht der Erfindung nach Fig. 3 bei Verwendung als Präsentationsvorrichtung.
- Fig. 5: zeigt eine perspektivische Seitenansicht einer dritten Ausführungsform der Erfindung bei herkömmlicher Verwendung als Laptop.
- Fig. 6: zeigt eine perspektivische Seitenansicht der Erfindung nach Fig. 5 bei Verwendung als Präsentationsvorrichtung.

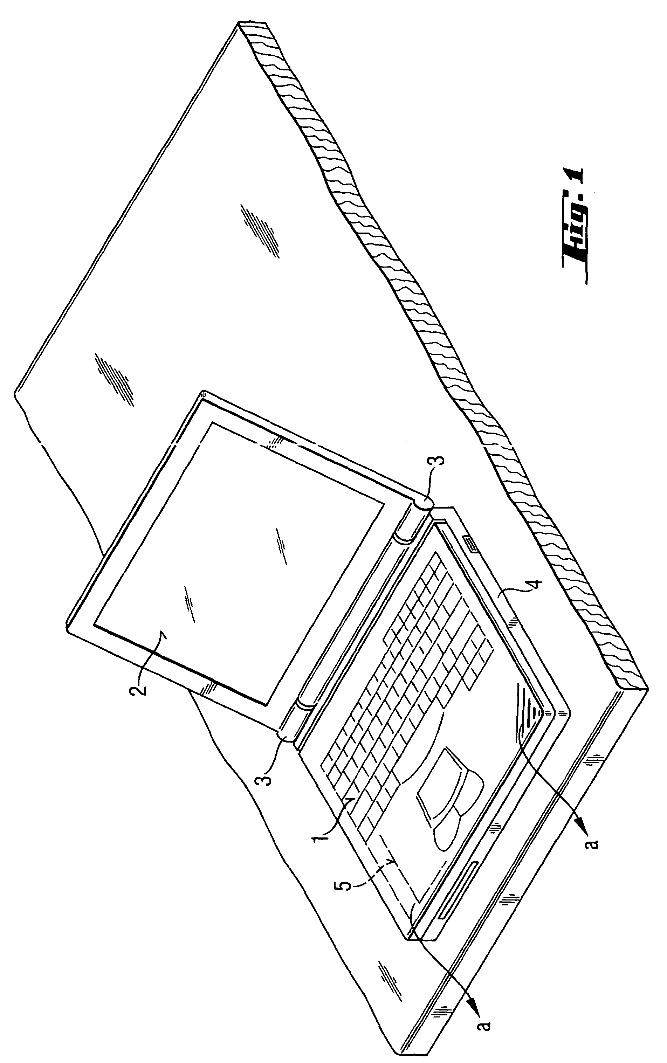

Die Fig. 1 zeigt eine perspektivische Seitenansicht der Erfindung bei herkömmlicher Verwendung als Laptop mit einer Tastatur 1, einem Hauptbildschirm 2, der mit Gelenken 3 an einem Grundkörper 4 des Laptops schwenkbar befestigt ist. Es ist auch möglich, falls gewünscht, die Tastatur 1 abzunehmen. Die Tastatur mit separater Stromversorgungseinrichtung ist in diesem Beispiel über eine herkömmliche Infrarot-Schnittstelle mit dem Rechner drahtlos gekoppelt, wobei es dem Fachmann frei steht, auch andere drahtlose Kopplungen einzusetzen.

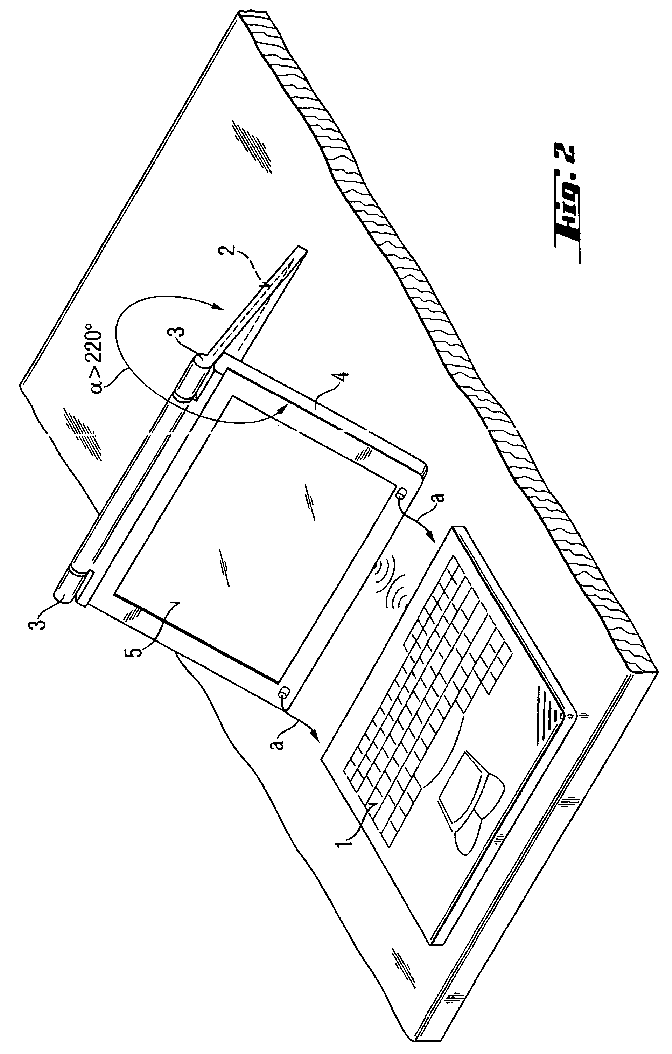

Die Fig. 2 zeigt die Erfindung bei Verwendung als Präsentationsvorrichtung. Die IR-gekoppelte Tastatur 1 ist abgenommen, so daß die Bedienperson einen zweiten Bildschirm 5 einsehen kann. Der Hauptbildschirm 2 als ein erster Bildschirm ist umgeklappt, wie mit dem Doppelpfeil gezeigt. Damit der Kunde das Bild des Hauptbildschirms richtig betrachten kann, wird es elektronisch um 180 Grad gedreht.

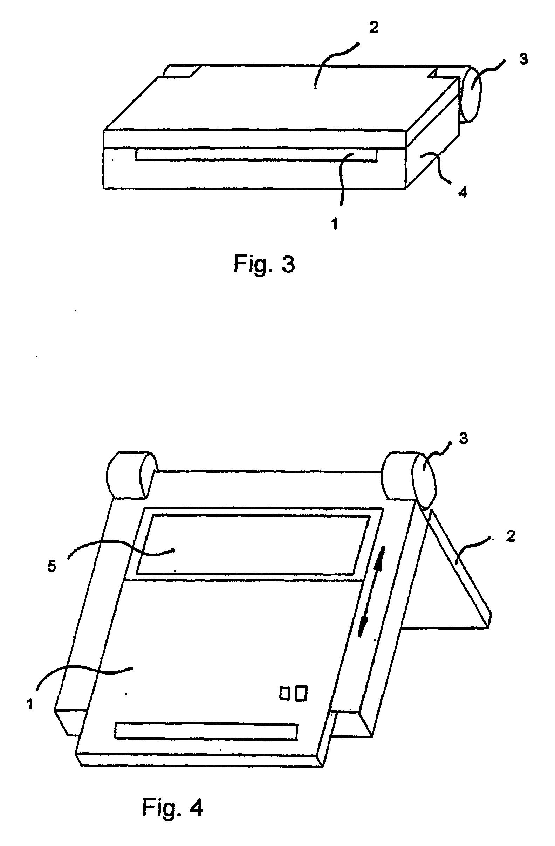

Die Fig. 3 zeigt eine perspektivische Seitenansicht der Erfindung bei herkömmlicher Verwendung als Laptop mit einer Tastatur 1, einem Hauptbildschirm 2, der mit Gelenken 3 an einem Grundkörper 4 des Laptops schwenkbar befestigt ist. Es ist auch möglich, falls gewünscht, die Tastatur herauszuschieben.

Die Fig. 4 zeigt die Erfindung bei Verwendung als Präsentationsvorrichtung. Die Tastatur 1 ist herausgeschoben, so daß die Bedienperson den zweiten Bildschirm 5 einsehen kann. Der Hauptbildschirm 2 ist umgeklappt, wie durch den Doppelpfeil gezeigt. Damit der Kunde das Bild des Hauptbildschirms richtig betrachten kann, wird es elektronisch um 180 Grad gedreht.

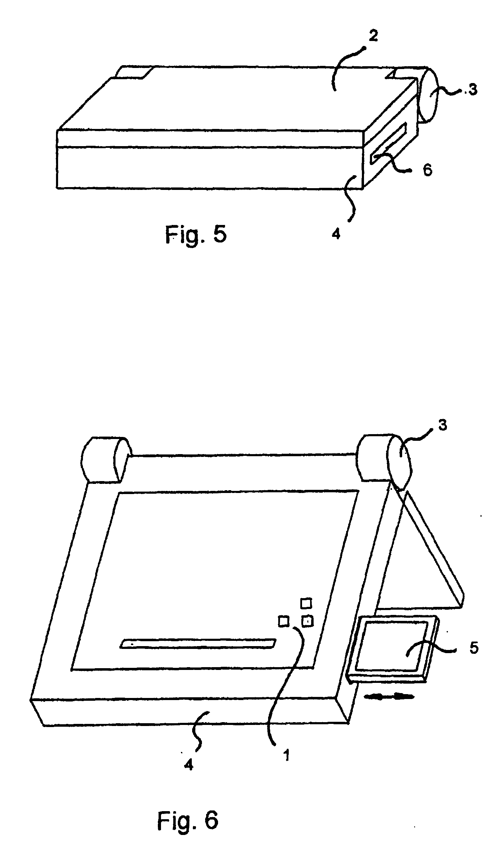

Die Fig. 5 zeigt ein Notebook im zusammengeklappten Zustand. Es unterscheidet sich nicht von einem herkömmlichen Notebook und weist einen Schacht 6 zur Aufnahme von Zusatzeinrichtungen auf.

Die Fig. 6 zeigt das Notebook als Präsentationsvorrichtung. Der Hauptbildschirm 2 ist in einem Winkel von ca. 270 Grad aufgeklappt bzw. umgeklappt, so daß eine dachförmige Konstruktion entsteht, die zwischen dem Kunden und dem Verkäufer standfest angeordnet wird. An der Querseite des Grundkörpers 4 des Notebooks ist ein Schacht 6, z. B. für ein CD-ROM-Laufwerk, angeordnet. In diesem Schacht 6 befindet sich eine Kontrollmonitor-Einheit mit einem ausfahrbaren Flachbildschirm 5. Wenn die Präsentationsvorrichtung benutzt werden soll, wird das Bild auf dem Hauptbildschirm 2 elektronisch um 180 Grad gedreht, so daß der Kunde ein aufrechtstehendes und seitenrichtiges Bild betrachten kann. Mittels eines Schalters oder durch eine Tastatureingabe wird der Flachbildschirm 5 der Kontrollmonitor-Einheit durch einen elektromotorischen Antrieb ausgefahren und kann dann von dem Verkäufer zur Eingabekontrolle eingesehen werden.

Die Ausbildung des elektromotorischen Antriebs der Kontrollmonitor-Einheit zum Ausfahren des Flachbildschirms 5 kann dem Fachmann überlassen werden, da es dazu keiner erfinderischen Tätigkeit bedarf. Gleiches gilt für die Schaffung der Steuerelektronik für die Bilddrehung des Hauptbildschirms um 180 Grad und für die Ansteuerung des Flachbildschirms 5 der Kontrollmonitor-Einheit.

Zusammenfassend ist festzustellen, daß die Gegenstände der Ansprüche 1, 4 und 8 auf einem einheitlichen Grundprinzip basieren. Nach diesem Konstruktionsprinzip ist der Sekundär-Bildschirm 5 unterhalb der Tastatur 1 angeordnet, der Primär-Bildschirm 2 ist in einem Winkel von wenigstens 220 Grad aufklappbar, und das Bild des Primär-Bildschirms 2 läßt sich um 180 Grad drehen.

Die Ausgestaltung des Sekundär-Bildschirms 5 hängt von den Anforderungen ab. Es ist möglich, den Sekundär-Bildschirm klein und/oder für Schwarz-Weiß-Anzeige zu wählen. In diesem Fall dient er lediglich als eine Eingabekontrollhilfe beim Eingeben von Buchstaben oder Zahlen. Es ist ebenso möglich, den Sekundär-Bildschirm von gleicher Qualität wie den Primär-Bildschirm zu wählen, wenn z. B. die Präsentationsvorrichtung auch noch als eine Spielkonsole genutzt werden soll, wobei sich zwei Spieler gegenübersitzen und lediglich ihren Bildschirm betrachten, um z. B. ein Kartenspiel zu spielen.

## Patentansprüche

1. Präsentationsvorrichtung, die als Laptop-Computer mit einer Abnehmbaren Tastatur **(1)** ausgebildet ist, wobei die Tastatur **(1)** mit separater Stromversorgung über eine drahtlose Verbindung an den Laptop-Computer angekoppelt ist und ein aufklappbarer Hauptbildschirm **(2)** mit Gelenken **(3)** an einem Grundkörper **(4)** des Laptop-Computers schwenkbar befestigt ist, **dadurch gekennzeichnet, dass**
- unter der abnehmbaren Tastatur **(1)** im Grundkörper **(4)** ein zweiter Bildschirm **(5)** vorgesehen ist,
- die Gelenke **(3)** einen Schwenkwinkel von mehr als 220 Grad ermöglichen und
- eine Steuereinrichtung vorgesehen ist, um das Bild auf dem Hauptbildschirm **(2)** um 180 Grad zu drehen, wenn der Hauptbildschirm **(2)** in einem Winkel von wenigstens 220 Grad geschwenkt ist.

2. Präsentationsvorrichtung nach Anspruch 1, **dadurch gekennzeichnet, daß** die Steuereinrichtung eine Schwenkwinkelerkennungsvorrichtung aufweist, die veranlaßt, daß bei einem vorbestimmten Schwenkwinkel des Hauptbildschirms **(2)** das Bild des Hauptbildschirms um 180 Grad gedreht wird und gleichzeitig der zweite Bildschirm **(5)** eingeschaltet wird.

3. Prasentationsvorrichtung nach Anspruch 1 und 2, **dadurch gekennzeichnet, daß** der zweite Bildschirm **(5)** kleiner als der Hauptbildschirm **(2)** ist.

4. Präsentationsvorrichtung, die als Laptop-Computer mit einer Tastatur **(1)** ausgebildet ist und ein aufklappbarer Hauptbildschirm **(2)** mit Gelenken **(3)** an einem Grundkörper **(4)** des Laptop-Computers schwenkbar befestigt ist, **dadurch gekennzeichnet, daß**
- die Tastatur **(1)** im Grundkörper **(4)** verschiebbar ist,
- unter der verschiebbaren Tastatur **(1)** ein zweiter Bildschirm **(5)** vorgesehen ist, die Gelenke **(3)** einen Schwenkwinkel von mehr als 220 Grad ermöglichen und
- eine Steuereinrichtung vorgesehen ist, die das Bild auf dem Hauptbildschirm **(2)** um 180 Grad dreht, wenn der Hauptbildschirm **(2)** in einem Winkel von 220 Grad geschwenkt ist.

5. Präsentationsvorrichtung nach Anspruch 4, **dadurch gekennzeichnet, daß** die Steuereinrichtung eine Schwenkwinkelerkennungsvorrichtung aufweist, die veranlaßt, daß bei einem vorbestimmten Schwenkwinkel des Hauptbildschirms **(2)** das Bild des Hauptbildschirms um 180 Grad gedreht wird und gleichzeitig der zweite Bildschirm **(5)** eingeschaltet wird.

6. Präsentationsvorrichtung nach Anspruch 4 und 5, **dadurch gekennzeichnet, daß** der zweite Bildschirm **(5)** ein Schwarz-Weiß-Bildschirm ist.

7. Präsentationsvorrichtung nach einem der Ansprüche 4 bis 6, **dadurch gekennzeichnet, daß** die Tastatur **(1)** auch abnehmbar ist, wobei die Kommunikation mit dem Rechner über eine Datenschnittstelle drahtlos erfolgt.

8. Notebook mit einer Tastatur **(1)**, einem aufklappbareren Hauptbildschirm **(2)** mit Gelenken **(3)**, der an einem Grundkörper **(4)** des Notebooks schwenkbar befestigt ist, **dadurch gekennzeichnet, daß**
- die Gelenke (3) einen Schwenkwinkel von mehr als 220 Grad ermöglichen,
- seitlich im Grundkörper **(4)** ein Schacht **(6)** vorgesehen ist, in dem eine Kontrollmonitor-Einheit mit einem seitlich ausfahrbaren kleinen Flachbildschirm **(5)** zur Eingabekontrolle angeordnet ist, und
- eine Steuereinheit zum Ansteuern der Kontrollmonitior-Einheit und zum Steuern des Aus- und Einfahrens des Flachbildschirms **(5)** vorgesehen ist.

9. Notebook nach Anspruch 8, **dadurch gekennzeichnet, daß** die Kontrollmonitor-Einheit mit dem Flachbildschirm **(5)** auf leichte Weise aus dem Grundkörper **(4)** lösbar ist.

10. Notebook nach Anspruch 9, **dadurch gekennzeichnet, daß** der Schacht **(6)** ein Schacht für ein Diskettenlaufwerk ist.

11. Notebook nach einem der vorhergehenden Ansprüche, **dadurch gekennzeichnet, daß** der Hauptbildschirm **(2)** für berührungssensitive Eingabe ausgelegt ist.

12. Flachbildschirmeinheit für ein Notebook nach den Ansprüchen 8 bis 11, **dadurch gekennzeichnet, daß** die Flachbildschirmeinheit einen ausfahrbaren Flachbildschirm **(5)** aufweist und die Flachbildschirmeinheit konstruktiv so ausgelegt ist, um in den Schacht **(6)** für ein CD-ROM-Laufwerk eines Notebooks zu passen.

## Claims

1. A presentation device, which is formed as a laptop computer with a removable keyboard (1), wherein keyboard (1) with a separate power supply is connected to the laptop computer by means of a wireless connection, and a hinged main display screen (2) that is swivelling fixed by hinges (3) to a base unit (4) of the laptop computer, is hereby **characterized in that**
- a second display screen (5) is provided underneath the removable keyboard (1) in base unit (4),
- hinges (3) make possible a rotating angle of more than 220 degrees and
- a control device is provided, for rotate the image on the main display screen (2) by 180 degrees, if the main display screen (2) is rotated for at least 220 degrees.

2. The presentation device according to claim 1, further **characterized in that** the control device has a device for recognizing the rotating angle and this device causes the image of the main display screen to rotate by 180 degrees and at the same time turns on the second display screen (5) at a predefined rotating angle of main display screen (2).

3. The presentation device according to claims 1 and 2, further **characterized in that** the second display screen (5) is smaller than the main display screen (2).

4. A presentation device, which is designed as a laptop computer with a keyboard (1) and a main display screen (2) that can be rotated out is attached so that so that it can turn by hinges (3) an a base unit (4) of the laptop computer, hereby **characterized in that**
- the keyboard (1) in base unit (4) can be pulled out,
- a second display screen (5) is provided under keyboard (1) that can be pulled out, and hinges (3) make possible a rotating angle of more than 220 degrees, and
- a control device is provided, which rotates the image on the main display screen (2) by 180 degrees, if the main display screen (2) is rotated at an angle of 220 degrees.

5. The presentation device according to claim 4, further **characterized in that** the control device has a device that recognizes the rotating angle, which [device] causes the image of the main display screen to rotate by 180 degrees and at the same time turns an the second display screen (5) if a predetermined rotating angle of the main display screen (2) is present.

6. The presentation device according to claims 4 and 5, further **characterized in that** the second display screen (5) is a black-and-white display screen.

7. The presentation device according to one of claims 4 to 6, further **characterized in that** keyboard (1) can also be removed, whereby the communication with the computer is made in a wireless manner by means of a data interface.

8. A notebook with a keyboard (1), a main display screen (2) that can be rotated out by hinges (3), which is attached to a base unit (4) of the notebook so that it can be turned, is hereby **characterized in that**
- hinges (3) make possible a rotating angle of more than 220 degrees,
- a slot (6) is provided laterally in base unit (4), in which [slot] a control monitoring unit is arranged with a small flat display screen (5) that can travel out laterally for monitoring input, and
- a control unit for controlling the control monitoring unit and for control of the travel in and out of flat display screen (5) is provided.

9. The notebook according to claim 8, further **characterized in that** the control monitoring unit with flat display screen (5) can be easily detached from base unit.

10. The notebook according to claim 9, further **characterized in that** slot (6) is a slot for a disk drive.

11. The notebook according to one of the preceding claims, further **characterized in that** the main display screen (2) is designed for contact-sensitive input.

12. A flat display screen unit for a notebook according to claims 8 to 11, is hereby **characterized in that** the flat display screen unit has a flat display screen (5) that can travel out and the flat display screen unit is designed in its construction to adapt to the slot (6) for a CD-ROM drive of a notebook.

## Revendications

1. Dispositif de présentation constitué d'un ordinateur portable avec un clavier amovible (1), le clavier (1) avec alimentation indépendante étant raccordé à l'ordinateur portable par l'intermédiaire d'une connexion sans fil, et un écran principal (2) escamotable avec des articulations (3) étant fixé de manière pivotante à un corps de base (4) de l'ordinateur portable, **caractérisé en ce que**
- un deuxième écran (5) est prévu dans le corps de base (4) sous le clavier amovible (1),
- les articulations (3) permettent un angle de pivotement de plus de 220 degrés, et
- un dispositif de commande est prévu, lequel permet de tourner l'image de 180 degrés sur l'écran principal (2), lorsque ledit écran principal (2) est pivoté dans un angle de 220 degrés au minimum.

2. Dispositif de présentation selon la revendication 1, **caractérisé en ce que** le dispositif de commande comporte un dispositif d'identification de l'angle de pivotement, ledit dispositif d'identification ordonnant un pivotement de 180 degrés de l'image de l'écran principal (2), lorsque celui-ci atteint un angle de pivotement prédéfini, et la mise en circuit simultanée du deuxième écran (5).

3. Dispositif de présentation selon la revendication 1 et 2, **caractérisé en ce que** le deuxième écran (5) est plus petit que l'écran principal (2).

4. Dispositif de présentation constitué d'un ordinateur portable avec un clavier (1), et un écran principal (2) escamotable avec des articulations (3), fixé de manière pivotante à un corps de base (4) de l'ordinateur portable, **caractérisé en ce que**
- le clavier (1) peut coulisser dans le corps de base (4),
- un deuxième écran (5) est prévu sous le clavier coulissant (1),
- les articulations (3) permettent un angle de pivotement de plus de 220 degrés, et
- un dispositif de commande est prévu, lequel tourne l'image de 180 degrés sur l'écran principal (2), lorsque celui-ci (2) est pivoté dans un angle de 220 degrés.

5. Dispositif de présentation selon la revendication 4, **caractérisé en ce que** le dispositif de commande comporte un dispositif d'identification de l'angle de pivotement, ledit dispositif d'identification ordonnant un pivotement de 180 degrés de l'image de l'écran principal (2), lorsque celui-ci atteint un angle de pivotement prédéfini, et la mise en circuit simultanée du deuxième écran (5).

6. Dispositif de présentation selon la revendication 4 et 5, **caractérisé en ce que** le deuxième écran (5) est un écran noir et blanc.

7. Dispositif de présentation selon l'une quelconque des revendications 4 à 6, **caractérisé en ce que** le clavier (1) est également amovible, la communication avec le calculateur se faisant sans fil par l'intermédiaire d'une interface de données.

8. Notebook avec un clavier (1), un écran principal (2) escamotable avec des articulations (3), fixé de manière pivotante à un corps de base (4) du notebook, **caractérisé en ce que**
- - les articulations (3) permettent un angle de pivotement de plus de 220 degrés,
- une ouverture d'installation (6) est prévue dans la paroi latérale du corps de base (4), dans laquelle ouverture est disposée une unité moniteur de contrôle avec petit écran plat latéralement escamotable (5) destiné au contrôle des entrées, et
- une unité de contrôle destinée à la commande de l'unité moniteur de contrôle et à la commande des mouvements de rentrée et sortie de l'écran plat (5).

9. Notebook selon la revendication 8, **caractérisé en ce que** l'unité moniteur de contrôle à écran plat (5) peut facilement se détacher du corps de base (4)

10. Notebook selon la revendication 9, **caractérisé en ce que** l'ouverture d'installation (6) est une ouverture d'installation d'un lecteur de disquettes.

11. Notebook selon l'une quelconque des revendications précédentes, **caractérisé en ce que** l'écran principal (2) est conçu pour permettre des entrées tactiles.

12. Unité à écran plat pour un notebook selon les revendications 8 à 11, **caractérisée en ce que** ladite unité à écran plat comporte un écran plat (5) escamotable et qu'elle est conçue pour permettre sa mise en place dans l'ouverture d'installation (6) d'un lecteur de CD-ROM d'un notebook.
